**Europäisches Patentamt**

**European Patent Office**

**Office européen des brevets**

(11) Publication number: **0 171 777**
**A2**

# (12) EUROPEAN PATENT APPLICATION

(21) Application number: **85110077.6**

(22) Date of filing: **10.08.85**

(51) Int. Cl.⁴: **C 08 F 255/02**
**C 08 L 23/04, B 32 B 27/32**
**C 09 J 3/00**
**//(C08F255/02, 220:06)**

(30) Priority: **15.08.84 US 641087**

(43) Date of publication of application:
**19.02.86 Bulletin 86/8**

(84) Designated Contracting States:
**BE CH DE FR GB LI NL SE**

(71) Applicant: **THE DOW CHEMICAL COMPANY**
**2030 Dow Center Abbott Road P.O. Box 1967**
**Midland, MI 48640(US)**

(72) Inventor: **Tabor, Ricky L.**
**56 AloeVera Court**
**Lake Jackson Texas 77566(US)**

(72) Inventor: **Allen, James A.**
**105 Fir Drive**
**Lake Jackson Texas 77566(US)**

(74) Representative: **Sternagel, Hans-Günther, Dr. et al,**
**Patentanwälte Dr. M. Hann Dr. H.-G. Sternagel**
**Marburger Strasse 38**
**. D-6300 Giessen(DE)**

(54) **Maleic anhydride grafts of olefin polymers.**

(57) Succinic acid or succinic anhydride grafts of HDPE are blended with LLDPE and/or with LDPE to form blends having useful adhesive properties. The succinic acid or succinic anhydride groups are provided by grafting, respectively, maleic acid or maleic anhydride onto HDPE.

# MALEIC ANHYDRIDE GRAFTS OF OLEFIN POLYMERS

Maleic acid or maleic anhydride is grafted onto high density polyethylene (HDPE), giving rise to succinic acid or succinic anhydride groups along the polymer chain. These grafted copolymers are useful in blends with other olefin polymers.

Grafting of unsaturated monomer molecules onto olefin polymers and copolymers has been disclosed in a number of patents. The grafting technique has been used to impart changes in the polymer to which the grafted molecules are attached.

With respect to the invention described and claimed in this application, it is believed that the following patents are representative of the relevant prior art on grafting: U.S. 2,970,129; U.S. 3,177,269; U.S. 3,270,090; U.S. 3,873,643; U.S. 3,882,194; U.S. 3,886,227; U.S. 4,087,587; U.S. 4,087,588; U.S. 4,239,830; U.S. 4,298,712; U.S. 4,394,485; U.K. 2,081,723; JP. Kokai 49(1973)-129742.

The principal distinctions between low density polyethylene (LDPE), high density polyethylene (HDPE), and linear low density polyethylene copolymer (LLDPE) are well-known to practitioners of the polyethylene art and are described, e.g., in U.S. 4,327,009.

There are, basically, two types of olefin polymerization techniques for preparing high molecular weight olefin polymers and copolymers. The oldest commercial technique involves high pressure, high temperature, and the use of a free radical initiator, such as a peroxide; these type polymers are generally known as low density polyethylene (LDPE) and are also known as ICI-type polyethylenes. These LDPE polymers contain branched chains of polymerized monomer units pendant from the main polymer "backbone" and generally have densities in the range of about 0.910-0.935 g/cm$^3$.

The other commercially-used technique involves coordination catalysts of the "Ziegler" type or "Phillips" type and includes variations of the Ziegler type, such as the Natta type. These catalysts may be used at very high pressures, but may also (and generally are) used at very low or intermediate pressures. The products made by these coordination catalysts are generally known as "linear" polymers because of the substantial absence of branched chains of polymerized monomer units pendant from the main polymer "backbone" and they are also generally known as high density polyethylene (HDPE). It is these "linear" polymers to which the present invention pertains. Linear polyethylene (HDPE) ordinarily has a density in the range of 0.941 to 0.965 g/cm$^3$.

32,212-F                    -2-

In some of the blends of the present invention there is used a "linear" type ethylene polymer wherein ethylene has been polymerized along with minor amounts of alpha,beta-ethylenically unsaturated alkenes having from 3 to 12 carbons per alkene molecule, preferably 4 to 8. The amount of the alkene comonomer is generally sufficient to cause the density of the polymer to be substantially in the same density range as LDPE, due to the alkyl sidechains on the polymer molecule, yet the polymer remains in the "linear" classification; they are conveniently referred to as "linear low density polyethylene" (LLDPE). These polymers retain much of the strength, crystallinity, and toughness normally found in HDPE homopolymers of ethylene, but the higher alkene comonomers impart high "cling" and "block" characteristics to extrusion-cast films and the high "slip" characteristic inherently found in HDPE is diminished.

The use of coordination-type catalysts for polymerizing ethylene into homopolymers (which we call "HDPE" polymers) and/or for copolymerizing ethylene with higher alkenes to make copolymers (which we call "LLDPE" copolymers) is disclosed in, e.g., U.S. 2,699,457; U.S. 2,862,917; U.S. 2,905,645; U.S. 2,846,425; U.S. 3,058,963; and U.S. 4,076,698.

High density polyethylene (LLDPE) having succinic acid or succinic anhydride groups grafted thereon is blended with other olefin polymers, i.e., LDPE or LLDPE, especially LLDPE, to produce blends having enhanced  adhesive properties.

The high density polyethylene polymer (HDPE) for use in the present invention is a normally solid, high molecular weight polymer prepared using a coordination-type catalyst in a process wherein ethylene is homopolymerized.

The LLDPE copolymer may have a density in the range of 0.88 g/cm$^3$ to 0.935 g/cm$^3$, preferably 0.90 g/cm$^3$ to 0.925 g/cm$^3$. It is evident to practitioners of the relevant arts that the density will depend, in large part, on the particular alkene(s) used as comonomer(s) and on the amount of said alkene(s) incorporated into the copolymer. The alkene(s) copolymerized with ethylene to make LLDPE comprises a minor amount of at least one olefinically unsaturated alkene having from 3-12 carbon atoms, most preferably from 4-8 carbon atoms; 1-octene is especially preferred. The amount of said alkene may constitute 0.5 percent to 35 percent by weight of the copolymer, preferably 1 percent to 20 percent, most preferably 2 percent to 15 percent.

The LLDPE copolymer may have a melt flow value (MFV) in the range of 0.1 g/10 min. to about 2000 g/10 min as measured in accordance with ASTM D-1238(E) test. Preferably the melt flow value is in the range of 0.5 g/10 min to 120 g/10 min, most preferably 0.7 g/10 min to 40 g/10 min Practitioners of the relevant arts are aware that the melt flow value is inversely related to the molecular weight of the polymer.

The LDPE which is blended with grafted HDPE in accordance with the present invention is characterized as having a melt flow value in the range of 0.5 g/10 min to 120 g/10 min according to ASTM D-1238(E) test and a density in the range of 0.90 $g/cm^3$ to 0.935 $g/cm^3$, preferably a MFV of 0.7 g/10 min to 40 g/10 min and a density of 0.91 to 0.93 $g/cm^3$.

The HDPE which is used in making the grafted HDPE in accordance with the present invention is characterized as having a melt flow value (MFV) in the range of 0.1 g/10 min to 500 g/10 min according to ASTM D-1238(E) test and a density in the range of 0.94 $g/cm^3$ to 0.965 $g/cm^3$, preferably a MFV of 0.5 g/10 min to 150 g/10 min and a density of 0.945 to 0.960 $g/cm^3$. The anhydride or acid groups generally comprise 0.001 to about 10 weight percent, preferably 0.01 to 5 weight percent.

The ratio of grafted-HDPE/polyolefin (i.e. LDPE, or LLDPE) of the present blend is in the range of 0.5/99.5 to 99.5/0.5, preferably 3/97 to 50/50.

The maleic acid and maleic anhydride compounds are known in these relevant arts as having their olefin unsaturation sites conjugated to the acid groups, in contradistinction to the fused ring and bicyclo structures of the non-conjugated unsaturated acids of, e.g., U.S. 3,873,643 and U.S. 3,882,194 and the like. Fumaric acid, like maleic acid of which it is an isomer, is also conjugated. Fumaric acid, when heated, gives off water and rearranges to form maleic anhydride, thus is operable in the present invention.

32,212-F

The grafting of the succinic acid or succinic anhydride groups onto ethylene polymers may be done by methods described in the art, which involve reacting maleic acid or maleic anhydride in admixture with heated polymer, generally using a peroxide or free-radical initiator to expedite the grafting.

Grafting may be effected in the presence of oxygen, air, hydroperoxides, or other free radical initiators, or in the essential absence of these materials when the mixture of monomer and polymer is maintained under high shear in the absence of heat. A convenient method for producing the graft copolymer is the use of extrusion machinery, however, Brabender mixers or Banbury mixers, roll mills and the like may also be used for forming the graft copolymers.

It is preferred in the present invention to employ a twin-screw devolatilizing extruder (such as a Werner-Pfleider twin-screw extruder) wherein maleic acid (or maleic anhydride)is mixed and reacted with the LLDPE at molten temperatures, thereby producing and extruding the grafted polymer. The so-produced grafted polymer is then blended, as desired, with LDPE or LLDPE to produce the blends of this invention.

The following described methods and tests are used in testing the polymers and blends in the following examples.

Molding of Test Specimens

On a 9" x 6" (0.225 m x 0.15 m) compression molder having two platens set at 350°F (176°C) and two

32,212-F                    -6-

platens water cooled, was molded a 25 mil ($62.5 \times 10^{-5}$ m) plaque of the material to be tested for adhesion. An appropriate amount of material to be molded was placed in the 25 mil ($62.5 \times 10^{-5}$ m) mold between two sheets of Mylar film, which, in turn was between two metal plates (support plates). The support plates containing the resin and mold were placed between the 350°F (176°C) heated platens of the compression molder and the platens were closed and allowed to heat with no pressure for one minute. After this time period, 10,000 lbs. (4536 kg) platen pressure were applied for one minute. The support plates containing the mold and polymer were then removed and placed in the water-cooled section for 1 minute. The Mylar film was removed and the polymer when desired was cut from the mold using a razor blade against a clean, hard surface.

## Adhering Test Specimen to Substrate

The molded specimen [9" x 6" (0.225 m x 0.15 m)] was placed against a substrate [at least 9" x 6"(0.225 m x 0.15 m)] with a Mylar film tab [3" x 9"(0.075 m x 0.225 m)] centered in transverse manner between the test specimen and substrate, leaving about 1.5" (0.038 m) of the tab protruding from each side of the so-formed "sandwich". Then a Mylar film (12" x 12") (0.3 m x 0.3 m) was placed on each side of the specimen/substrate sandwich and a steel support plate and placed against each of the Mylar films. ("Mylar" is the well-known DuPont tradename for polyethyleneterephthalate). The sandwich structure described above was placed between the hot (177°C) platens of a compression molder and pressed immediately to 10,000 psi (68947 kPa) and held there for two minutes. After this, the sandwich was removed from

32,212-F

the hot platens and placed between the cool platens for two minutes. The sandwich was removed from the press and the Mylar film was removed from each side of the polymer/substrate laminate.

The laminate was then cut into 5 equal 1" (0.025 m) wide strips by cutting longitudinally. Each of five test strips were slightly peeled back by hand, then were mounted (clamped) in the Instron tensile tester. The Instron tester was run at a pulling rate of 2"/min (0.05 m/ min) was at a free hanging peel angle and the tensile force was recorded on a strip chart until about 2-3 inches (0.05-0.075 m) have been peeled. The average of the five peels was taken as the adhesion in pounds per inch (newton per mettre, N/m).

The following examples are provided as illustrations of various embodiments, but the invention is not limited to the embodiments shown.

DESCRIPTION OF SUBSTRATES

Electrolytic chromium coated steel had a thickness of 6 mils ($15 \times 10^{-5}$ m); this steel was chosen due to its popular use in polyolefin applications.

The aluminum used below is coiled aluminum 5 mils ($12.5 \times 10^{-5}$ m) thick, 18" (0.45 m) wide, grade 3003-H14.

The copper used below is copper sheet 110 alloy, fully annealed, 99 percent pure, 5 mils ($12.5 \times 10^{-5}$ m) thick.

The nylon-6 used below is a film 5 mils (12.5 x $10^{-5}$ m) thick and 20 inches (0.5 m) wide.

The oriented polypropylene (OPP) used below is a film grade 1 mil (2.5 x $10^{-5}$ m) thick and 6 inches (0.15 m) wide.

The polypropylene (PP) film used below is 5 mils (12.5 x $10^{-5}$ m) thick, 6 inches (0.15 m) wide.

EXAMPLE 1 (Blend of grafted HDPE with, respectively, LDPE and LLDPE and ungrafted HDPE for comparison purposes)

A HDPE homopolymer (the "base" polymer), melt flow value (MFV) of 0.83 g/10 min (ASTM D-1238(E)) and density of 0.965 $g/cm^3$, was extruded with maleic anhydride (3.0 parts per hundred resin, phr) and dicumyl peroxide (0.3 parts per hundred resin, phr) at an average melt temperature of 225°C (range 180°-250°C) using a Werner--Pfleiderer twin-screw devolitization extruder. The final incorporated concentration of maleic anhydride was 0.5 percent by weight (as determined by titration) and has a MFV of 0.5 g/10 min; this is called the MAH-grafted HDPE.

Using a 6-inch (0.15 m) Farrell two-roll mill, 250 g samples were blended having compositions ranging from 5 percent MAH-grafted HDPE to 50 percent MAH-grafted LLDPE in various HDPE resins, and in LDPE, at a melt temperature of 170°C. The blends were adhered to a variety of substrates and tested for adhesion by the methods described supra. The results are displayed in Table I-V, where adhesion is given in lbs/in. (N/m).

32,212-F                    -9-

## TABLE IV

### ADHESION OF BLENDS OF MAH-GRAFTED HDPE WITH LDPE

| Blend | Steel | Copper | Alum | OPP | PP |
|---|---|---|---|---|---|
| Control, 100% LDPE* | 0 | 0 | 0 | 0.06 (10.5) | 0.04 (7) |
| 5% MAH-Grafted HDPE | 17.6 (3080) | 1.88 (329) | 15.84 (2772) | 0.05 (8.75) | 0.03 (5.25) |
| 10% MAH-Grafted HDPE | 10.28 (17.99) | 2.10 (367.5) | 7.32 (1281) | 0.05 (8.75) | 0.05 (8.75) |
| 20% MAH-Grafted HDPE | 4.56 (98) | 2.70 (472.5) | 4.11 (719.25) | 0.08 (14) | 0.60 (105) |
| 50% MAH-Grafted HDPE | 8.0 (1400) | 2.41 (421.75) | 7.49 (1310.75) | 0.13 (22.75) | 0.13 (22.75) |
| Control, 100% MAH-Grafted HDPE | 18.9 (3307.5) | 1.00 (175) | 9.30 (1627.5) | 1.40 (245) | 0.90 (157.5) |

*5.87 MFV, 0.923 density

TABLE V

ADHESION OF BLENDS OF MAH-GRAFTED HDPE WITH LLDPE

| Blend | Steel | Copper | Alum | OPP | PP |
|---|---|---|---|---|---|
| Control, 100% LLDPE* | 0 | 0 | 0 | 0.32 (56) | 0.14 (24.5) |
| 5% MAH-Grafted HDPE | 3.10 (542.5) | 0.93 (162.75) | 0.75 (131.25) | 0.41 (71.75) | 0.12 (21) |
| 10% MAH-Grafted HDPE | 24.58 (4301.5) | 3.92 (686) | 6.44 (1127) | 0.34 (59.5) | 0.85 (148.75) |
| 20% MAH-Grafted HDPE | 26.48 (4634) | 5.80 (1015) | 17.75 (3111.5) | 0.27 (47.25) | 0.10 (17.5) |
| 50% MAH-Grafted HDPE | 26.00 (4550) | 3.10 (542.5) | 13.24 (2317) | 0.33 (57.75) | 0.18 (31.5) |
| Control, 100% MAH-Grafted HDPE | 18.9 (3307.5) | 1.00 (175) | 9.30 (1627.5) | 1.40 (245) | 0.90 (157.5) |

*24 MFV, 0.921 density, 10% 1-octene

## TABLE III

### ADHESION OF BLENDS OF MAH-GRAFTED HDPE WITH LDPE

| Blend | Steel | Copper | Alum | OPP | PP |
|---|---|---|---|---|---|
| Control, 100% LDPE* | 0 | 0 | 0 | 0.89 (155.75) | 1.05 (183.75) |
| 5% MAH-Grafted HDPE | 0 | 0.15 (26.25) | 0 | 1.35 (236.25) | 1.02 (178.5) |
| 10% MAH-Grafted HDPE | 0.43 (75.25) | 0.32 (24) | 0 | 1.14 (199.5) | 0.87 (152.25) |
| 20% MAH-Grafted HDPE | 12.3 (2152.5) | 0.80 (140) | 3.14 (549.5) | 0.98 (171.5) | 0.94 (164.5) |
| 50% MAH-Grafted HDPE | 20.0 (3500) | 0.78 (136.5) | 4.49 (785.75) | 0.93 (162.75) | 0.68 (119) |
| Control, 100% MAH-Grafted HDPE | 18.9 (3307.5) | 1.0 (175) | 9.30 (1627.5) | 1.40 (245) | 0.90 (157.5) |

*5.15 MFV, 0.965 density

TABLE II

ADHESION OF BLENDS OF MAH-GRAFTED HDPE WITH LLDPE

| Blend | Steel | Copper | Alum | Nylon | OPP | PP |
|---|---|---|---|---|---|---|
| Control, 100% LLDPE* | 0.17 (29.75) | 0.0 | 0.0 | 0.25 (43.75) | 1.44 (252) | 0.32 (56) |
| 10% MAH-Grafted HDPE | 12.0 (2100) | 5.0 (875) | 6.9 (1207.5) | 16.8 (2940) | 0.8 (140) | 0.12 (21) |
| 20% MAH-Grafted LLDPE | >36.0 (>6300) | 8.1 (1417.5) | 14.2 (2485) | 13.6 (2380) | 1.03 (180.25) | 0.15 (26.25) |
| 40% MAH-Grafted LLDPE | 32.2 (5635) | 7.0 (1225) | 14.7 (2572.5) | 6.8 (1190) | 1.21 (211.75) | 0.17 (29.75) |
| Control, 100% MAH-Grafted HDPE | 18.9 (3307.5) | 1.0 (175) | 9.3 (1627.5) | 0.3 (52.5) | 1.4 (245) | 0.9 (157.5) |

*7% 1-octene, 5.98 MFV, 0.918 density

32,212-F

## TABLE I

### ADHESION OF BLENDS OF MAH-GRAFTED HDPE WITH HDPE

| Blend | Steel | Copper | Alum | Nylon | OPP | PP |
|---|---|---|---|---|---|---|
| Control, 100% HDPE* | 0.19 (33.25) | 0.00 | 0.00 | 0.04 (7.0) | 0.71 (124.25) | 1.58 (276.5) |
| 10% MAH-Grafted HDPE | 12.5 (2187.5) | 0.67 (117.25) | 0.77 (134.75) | 8.6 (1505) | >1.53 (>267.75) | 0.18 (31.5) |
| 20% MAH-Grafted HDPE | 14.8 (2590) | 1.56 (273) | 1.79 (313.25) | 4.58 (801.5) | 1.33 (232.75) | 1.12 (196) |
| 40% MAH-Grafted HDPE | 16.7 (2922.5) | 0.86 (150.5) | 2.18 (381.5) | 1.54 (269.5) | 1.5 (262.5) | 1.17 (204.75) |
| Control, 100% MAH-Grafted HDPE | 18.9 (3307.5) | 1.0 (175) | 9.3 (1627.5) | 0.3 (52.5) | 1.4 (245) | 0.9 (157.5) |

*0.83 MFV, 0.9658 density

The MAH-grafted HDPE copolymers of the present invention are useful alone in many applications wherein their adhesive properties and their strength properties offer an advantage to the user and are also useful as a blend component in improving the adhesive properties of other polymers, especially polyolefins such a LLDPE, LDPE, HDPE, PP, OPP, and the like and are particularly useful as a blend component for improving the adhesive properties of LLDPE and LDPE,. The polymers and blends of the present invention are useful for extrusion coating of articles, such as metals, polymer films, paper, wood, or glass, and as adhesive or barrier layers in multilayer films, as adhesive layers in packaging, as laminate adhesives, as hot melt coatings or adhesives, as wire and cable interlayers, and in other applications where the thermoplasticity, the processability, the tenacity and/or the adhesiveness is utilized.

1.    A blend of grafted high density poly-
ethylene (HDPE), with at least one polymer of the group
consisting of ungrafted linear low density polyethylene
(LLDPE), and low density polyethylene LDPE, wherein the
grafted HDPE comprises HDPE having succinic acid or
succinic anhydride groups grafted along the HDPE
copolymer chain.

2.    The blend of Claim 1 wherein the said
polymer is LLDPE having a density in the range of 0.88
g/cm³ to 0.935 g/cm³ and is one wherein the alkene
comonomer comprises an alkene having from 3-12 carbon
atoms, said alkene comonomer comprising 0.5 percent to
about 35 percent by weight of the LLDPE copolymer.

3.    The blend of Claim 2 wherein the said
LLDPE has a density in the range of 0.90 g/cm³ to
0.925 g/cm³ and said alkene, comonomer comprises an 1% to
20% by weight of the LLDPE copolymer.

4.    The blend of Claim 2 wherein the said
LLDPE is a copolymer of ethylene/1-octene having a density
in the range of 0.90 g/cm³ to 0.925 g/cm³ and where the
1-octene comonomer, comprises 2 percent to 15 percent by
weight of the LLDPE copolymer.

32,212-F

5.    The blend of Claim 2 wherein the LLDPE has a melt flow value (MFV) in the range of 0.1 g/10 min to 2000 g/10 min as measured according to ASTM D-1238(E).

6.    The blend of Claim 1 wherein said polymer is LDPE having a melt flow value (MFV) in the range of 0.5 g/10 min to 120 g/10 min according to ASTM D-1238 (E) and a density in the range of 0.90 g/cm³ to 0.935 g/cm³.

7.    The blend of Claim  1 wherein the HDPE, before grafting, has a melt flow value in the range of 0.1 g/10 min to 500 g/10 min and a density in the range of 0.94 g/cm³ to 0.965 g/cm³.

8.    The blend of Claim 1 wherein the succinic acid or succinic anhydride groups on the HDPE polymer chain comprise 0.0001 to 10 weight percent of the grafted polymer.

9.    The blend of Claim 1 wherein the grafted HDPE comprises 0.5 percent to 99.5 weight percent of the blend.

10.    The blend of Claim 1 in the form of a layer adhered to at least a part of at least one substrate.

11.    A laminate structure comprising at least one substrate comprising at least one metal, paper, wood, glass, polymer, plastic or resin material having adhered to at least a portion thereof a blend of Claim 1.

32,212-F

0171777

12. The laminate structure of Claim 11 wherein the substrate comprises at least one material selected from the group comprising iron, steel, chromium, aluminum, copper, nylon, propylene, oriented propylene, paper, wood, glass, or ethylene polymer.

13. The laminate structure of Claim 11 wherein the substrate is a polyamide resin.

14. The laminate structure of Claim 11 wherein the substrate is an ethylene-vinyl alcohol copolymer.